# EUROPEAN PATENT SPECIFICATION

(11) **EP 2 918 906 B1**
(45) Date of publication and mention of the grant of the patent: **13.02.2019**
(21) Application number: 14159152.9
(22) Date of filing: 12.03.2014
(51) Int. Cl.: F21V 19/00, F21Y 115/10

(54) **Socket assembly and clamp for a socket assembly**
Buchsenanordnung und -klemme für eine Klemmenanordnung
Ensemble de douille et pince de serrage pour un tel ensemble

(43) Date of publication of application: 16.09.2015
(73) Proprietor: TE Connectivity Nederland B.V., 5222 AR 's Hertogenbosch (NL)
(72) Inventor: Leijnse, Olaf, 5721 RD Asten (NL); Poorter, Peter, 4261 LD Wijk en Aalburg (NL); Iedema, Jeroen, 8471 KA Wolvega (NL); Bernardi, Alessandro, 5611 AW Eindhoven (NL)
(74) Representative: Patentanwaltskanzlei WILHELM & BECK

(56) References cited:
- EP-A2- 2 295 844
- EP-A2- 2 413 021
- WO-A1-2011/015168
- WO-A1-2011/124974
- US-A- 4 728 235
- US-A- 5 827 026
- US-A1- 2005 180 157
- US-A1- 2008 130 275
- US-A1- 2011 031 864
- US-B2- 8 568 001

## Description

The present invention relates to a socket assembly according to claim 1.

Socket assemblies for housing optoelectronic packages are known in the state of the art. An exemplary socket assembly is described in US 8,568,001 B2. An optoelectronic package may for example be a package comprising a light emitting diode (LED). Optoelectronic packages are typically provided as chip-on-board packages that comprise an optoelectronic semiconductor chip arranged on a printed circuit board. Socket assemblies for housing such packages typically provide means for holding the package, mounting the package on a carrier, electrically connecting the package and for cooling the package. Cooling the package can be achieved by pressing the package against a heat sink. A pressure force exerted on the package should be constant and independent of aging and temperature differences.

Document WO2011/124974 A1 discloses a socket assembly according to the preamble of claim 1.

It is an object of the present invention to provide a socket assembly. This objective is achieved by a socket assembly according to claim 1. Preferred embodiments are disclosed in the dependent claims.

A clamp for a socket assembly comprises an upper plate and a lower plate that are arranged in parallel to each other. The upper plate and the lower
plate can be pressed together. The upper plate is connected to a pressing section. Advantageously, this clamp can press a circuit board arranged in a central opening of a frame of a socket assembly against a carrier, for example against a heat sink. At the same time, the clamp can be used for affixing the frame of the socket assembly to the carrier.

In an embodiment of the clamp, the upper plate comprises an upper hole. The lower plate comprises a lower hole that is arranged coaxially to the upper hole. This allows to feed a screw through the upper hole of the upper plate and the lower hole of the lower plate of the clamp. The screw can thus be used to press the upper plate and the lower plate of the clamp together to clamp a frame of a socket assembly between the upper plate and the lower plate of the clamp and/or to press a circuit board arranged in a central opening of a frame against a carrier. To this end, a screw can for example be fed through the upper hole of the upper plate and the lower hole of the lower plate of the clamp and screwed into a threaded hole arranged in a carrier. This allows to precisely control the force that is used to press the upper plate and the lower plate of the clamp together by the depth that the screw is screwed into the hole. This allows to precisely control the force that is applied by the pressing section of the clamp onto a circuit board arranged in a central opening of a frame of a socket assembly to press the circuit board against the carrier. The pressing force can for example be controlled by controlling a torque applied to the screw while screwing the screw into the threaded hole of the carrier.

In an embodiment of the clamp, the upper hole comprises a chamfer on the side of the upper plate that faces away from the lower plate. Advantageously, this allows to countersink a screw head on the side of the upper plate that faces away from the lower plate of the clamp.

In an embodiment of the clamp, the upper plate and the lower plate of the clamp are connected by a connecting section. Advantageously, this allows for an easy construction of the clamp and an easy manufacture of the clamp. The clamp can for example be manufactured by stamping and bending from a sheet material.

In an embodiment of the clamp, the connecting section is opposed to the pressing section. Advantageously, this allows for a movement of the pressing section when the upper plate of the clamp is pressed towards the lower plate of the clamp.

In an embodiment of the clamp, the pressing section extends from the upper plate at least partially towards the lower plate. Advantageously, this allows to apply a pressure on a circuit board arranged in a central opening of a frame of a socket assembly with the pressing section of the clamp, even if the circuit board comprises a low height.

In an embodiment of the clamp, the lower plate comprises at least one wing section that extends from the lower plate at least partially towards the upper plate. Advantageously, this allows to arrange an anchoring section of a frame of a socket assembly below the wing section of the lower plate of the clamp such that mounting the lower plate of the clamp onto a carrier affixes the frame of the socket assembly on the carrier.

In an embodiment of the clamp, the clamp comprises a metal. Advantageously, this makes the clamp mechanically robust and insusceptible to aging. A further advantage is that the clamp comprising metal can be used to exert a pressure on a circuit board arranged in a central opening of a frame of a socket assembly that shows a predictable behavior over temperature and lifetime.

In an embodiment of the clamp, the clamp is elastically deformable. Advantageously, this allows for creating a reproducible pressure force exerted by the pressing section of the clamp on a circuit board arranged in a central opening of a frame of a socket assembly by elastically pressing the upper plate and the lower plate of the clamp together.

A socket assembly according to the invention comprises a frame and a first clamp. The first clamp comprises an upper plate and a lower plate that are arranged in parallel to each other. The frame comprises a central opening for receiving a circuit board. The upper plate is connected to a pressing section of the first clamp that is provided for being pressed on a circuit board arranged in the central opening. Advantageously, the first clamp of this socket assembly can press a circuit board arranged in the central opening of the frame of the socket assembly against a carrier, for example against a heat sink. Pressing the circuit board against the carrier may support a good thermal connection between the circuit board and the carrier and help to remove heat from the circuit board.

In an embodiment of the socket assembly, the lower plate comprises a wing section that extends from the lower plate at least partially towards the upper plate. An anchoring section of the frame is arranged below the wing section. Advantageously, this allows the first clamp of the socket assembly to be used for affixing the frame of the socket assembly to a carrier. Consequently, the socket assembly comprises only a small number of individual parts, which allows for a simple and coast-efficient production of the socket assembly as well as for an easy and fast assembly of the socket assembly.

In an embodiment of the socket assembly, an anchoring section of the frame is arranged between the upper plate and the lower plate. The upper plate and the lower plate can be pressed together such that the anchoring section of the frame is clamped between the upper plate and the lower plate. Advantageously, this allows the first clamp of the socket assembly to be used for affixing the frame of the socket assembly to a carrier. Consequently, the socket assembly comprises only a small number of individual parts, which allows for a simple and cost-efficient production of the socket assembly as well as for an easy and fast assembly of the socket assembly.

The frame can be arranged on a carrier such that the lower plate of the first clamp is in contact with the carrier. The upper plate and the lower plate of the first clamp can be pressed together such that a circuit board arranged in the central opening is pressed against the carrier by the pressing section of the first clamp. This allows to press the upper plate and the lower plate of the first clamp together by pressing the upper plate of the first clamp towards the carrier while the lower plate of the clamp is held by the carrier. Advantageously, this allows for simple mounting of the socket assembly.

In an embodiment of the socket assembly, the upper plate of the first clamp comprises an upper hole. The lower plate of the first clamp comprises a lower hole that is arranged coaxially to the upper hole. This allows to feed a screw through the upper hole of the upper plate and the lower hole of the lower plate of the first clamp. The screw can thus be used to press the upper plate and the lower plate of the first clamp together to clamp the frame between the upper plate and the lower plate of the first clamp and/or to press a circuit board arranged in the central opening of the frame against a carrier. To this end, a screw can for example be fed through the upper hole of the upper plate and the lower hole of the lower plate of the first clamp and screwed into a threaded hole arranged in a carrier. This allows to precisely control the force that is used to press the upper plate and the lower plate of the first clamp together by the depth that the screw is screwed into the hole. This allows to also precisely control the force that is applied by the pressing section of the first clamp onto a circuit board arranged in the central opening of the frame of the socket assembly to press the circuit board against the carrier. The pressing force can for example be controlled by controlling a torque applied to the screw while screwing the screw into the threaded hole of the carrier.

In an embodiment of the socket assembly, the upper hole comprises a chamfer on the side of the upper plate that faces away from the lower plate. Advantageously, this allows to countersink a screw head on the side of the upper plate that faces away from the lower plate of the first clamp.

In an embodiment of the socket assembly, the upper plate and the lower plate of the first clamp are connected by a connecting section of the first clamp. Advantageously, this allows for an easy construction of the first clamp and an easy manufacture of the first clamp. The first clamp can for example be manufactured by stamping and bending from a sheet material.

In an embodiment of the socket assembly, the connecting section is opposed to the pressing section. Advantageously, this allows for a movement of the pressing section when the upper plate of the first clamp is pressed towards the lower plate of the first clamp.

In an embodiment of the socket assembly, the pressing section of the first clamp extends from the upper plate at least partially towards the lower plate of the first clamp. Advantageously, this allows to apply a pressure on a circuit board arranged in the central opening of the frame of the socket assembly with the pressing section of the first clamp, even if the circuit board comprises a low height.

In an embodiment of the socket assembly, the first clamp comprises a metal. Advantageously, this makes the first clamp mechanically robust and insusceptible to aging. A further advantage is that the clamp comprising metal can be used to exert a pressure on a circuit board arranged in the central opening of the frame of the socket assembly that shows a predictable behavior over temperature and life time.

In an embodiment of the socket assembly, the first clamp is elastically deformable. Advantageously, this allows for creating a reproducible pressure force exerted by the pressing section of the first clamp on a circuit board arranged in the central opening of the frame by elastically pressing the upper plate and the lower plate of the first clamp together.

In an embodiment of the socket assembly, the socket assembly comprises a second clamp that is designed like the first clamp. Advantageously, the first clamp and the second clamp allow to press a circuit board arranged in the central opening of the frame of the socket assembly against a carrier at two opposite sides, resulting in a uniform contact between the circuit board and the carrier. At the same time, the first clamp and the second clamp of the socket assembly allow to affix the frame of the socket assembly together, ensuring a robust mounting of the socket assembly.

In an embodiment of the socket assembly, the frame comprises an electrically insulating material. Advantageously, this allows the frame to electrically isolate electric contacts of a carrier board arranged in the central opening of the frame of the socket assembly against each other.

In an embodiment of the socket assembly, the socket assembly is designed for receiving a printed circuit board of an LED package in the central opening of the frame. The LED package can for example be a chip-on-board package.

In an embodiment of the socket assembly, the socket assembly comprises a cover. The cover can be arranged on the frame. Advantageously, the cover can be used to enclose components of the socket assembly arranged on the frame of the socket assembly and to protect those components from being damaged by external causes.

In an embodiment of the socket assembly, a metallic contact spring is arranged on the frame. The contact spring is designed for being connected to a wire and for being connected to a contact pad of a circuit board received in the central opening of the frame. Advantageously, this socket assembly can be used to electrically connect a circuit board received in the central opening of the frame of the socket assembly. It is possible to provide the socket assembly with more than one contact spring to electrically connect a plurality of contact pads of the circuit board.

The invention will now be explained in more detail with reference to the Figures in which
Fig. 1 shows a schematic perspective view of an LED package;
Fig. 2 shows a schematic perspective view of a frame of a first socket assembly;
Fig. 3 shows a schematic perspective view of a cover of the first socket assembly;
Fig. 4 shows a schematic perspective view of a first clamp of the first socket assembly;
Fig. 5 shows a schematic top view of the first clamp of the first socket assembly;
Fig. 6 shows a schematic perspective view of the first socket assembly in an assembled state;
Fig. 7 shows a schematic perspective view of the first socket assembly with the cover removed;
Fig. 8 shows a schematic cross section of the first socket assembly;
Fig. 9 shows a schematic perspective view of a frame of a second socket assembly;
Fig. 10 shows a schematic perspective view of a first clamp of the second socket assembly;
Fig. 11 shows a further schematic perspective view of the first clamp of the second socket assembly; and
Fig. 12 shows a schematic cross section of the second socket assembly.

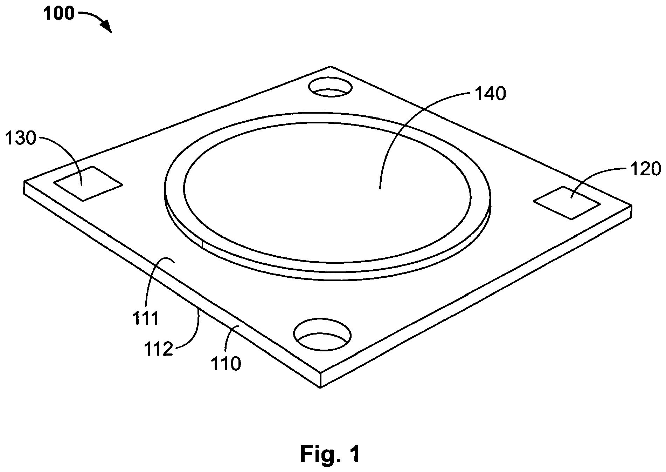

Fig. 1 shows a schematic perspective view of an LED package 100. The LED package 100 is designed as a chip-on-board package. The LED package 100 is shown as an example only and can be replaced by any other package.

The LED package 100 comprises a circuit board 110. The circuit board 110 may for example be a printed circuit board. The circuit board 110 comprises an upper side 111 and a lower side 112 that is opposed to the upper side 111. In the example depicted in Fig. 1, the circuit board 110 of the LED package 100 comprises a rectangular shape. However, it is possible to design the circuit board 110 with any other shape, for example with a circular shape.

A light emitting diode (LED) chip is arranged on the upper side 111 of the circuit board 110 of the LED package 100. The LED chip is encapsulated in a sealing compound 140 and thus not visible in the depiction of Fig. 1. The LED chip is designed for emitting electromagnetic radiation, for example visible light. The sealing compound 140 is arranged in a circular disc shape in the example of Fig. 1, but may alternatively be arranged in any other shape. The sealing compound 140 may for example comprise silicone and serves to protect the LED chip. The sealing compound 140 can further comprise particles that serve to convert a wavelength of electromagnetic radiation emitted by the LED chip.

A first contact pad 120 and a second contact pad 130 are arranged on the upper side 111 of the circuit board 110 of the LED package 100. The first contact pad 120 and the second contact pad 130 are provided for electrically contacting the LED chip of the LED package 100. The first contact pad 120 and the second contact pad 130 are connected to the LED chip by electrically conductive circuit paths which are not visible in Fig. 1. The circuit paths can be arranged on the upper side 111 of the circuit board 110, the lower side 112 of the circuit board 110 or inside the circuit board 110.

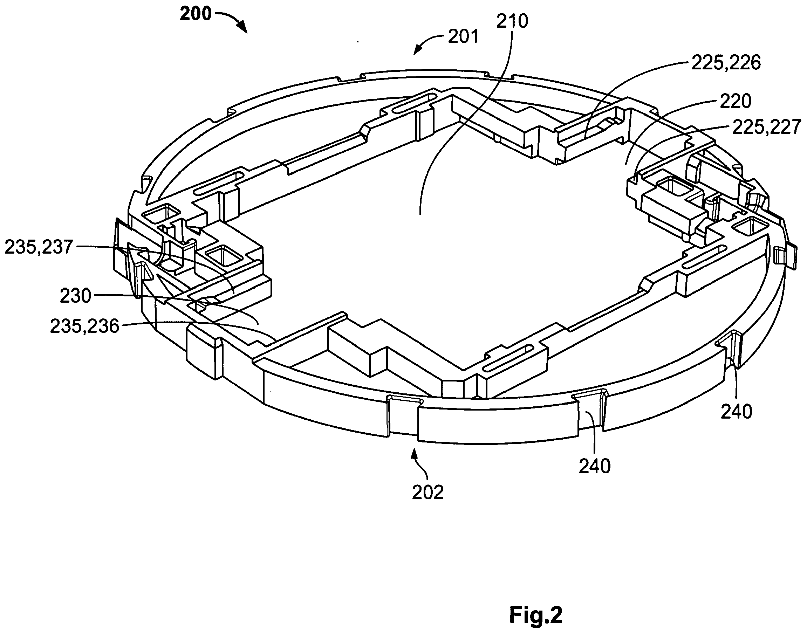

Fig. 2 shows a schematic perspective view of a frame 200. The frame 200 is a part of a socket assembly that serves to hold the LED package 100 of Fig. 1.

The frame 200 comprises an electrically insulating material. The frame 200 may for example comprise a plastic material. The frame 200 can for example be produced by molding.

The frame 200 comprises a generally flat shape with an upper side 201 and a lower side 202 that is opposed to the upper side 201. In the example depicted in Fig. 2, the frame 200 comprises a circular shape. However, it is possible to design the frame 200 with any other shape, for example with a rectangular shape.

The frame 200 comprises a central opening 210 that is arranged approximately in the center of the frame 200. The central opening 210 forms an opening between the upper side 201 and the lower side 202 of the frame 200. The central opening 210 comprises substantially the same shape and size as the LED package 100, such that the LED package 100 can be arranged in the central opening 210 of the frame 200. Consequently, in the example depicted in Fig. 2, the central opening 210 comprises a rectangular shape.

The frame 200 comprises a first side opening 220 and a second side opening 230. The first side opening 220 and the second side opening 230 form openings between the upper side 201 and the lower side 202 of the frame 200. The first side opening 220 and the second side opening 230 are arranged directly adjacent to the central opening 210, such that the empty spaces of the central opening 210, the first side opening 220 and the second side opening 230 are connected. The first side opening 220 and the second side opening 230 are arranged at opposite sides of the central opening 210.

In the area of the first side opening 220, the frame 200 comprises a first anchoring section 225. The first anchoring section 225 comprises a first bar 226 and a second bar 227 that are arranged parallel to each other on two opposing sides of the first side opening 220. In the area of the second side opening 230, the frame 200 comprises a second anchoring section 235. The second anchoring section 235 comprises a first bar 236 and a second bar 237. The first bar 236 and the second bar 237 are arranged in parallel to each other on two opposing sides of the second side opening 230. The frame 200 comprises a plurality of grooves 240 arranged at an outer circumference of the frame 200. The grooves 240 are provided for connecting the frame 200 to a cover which will be described below.

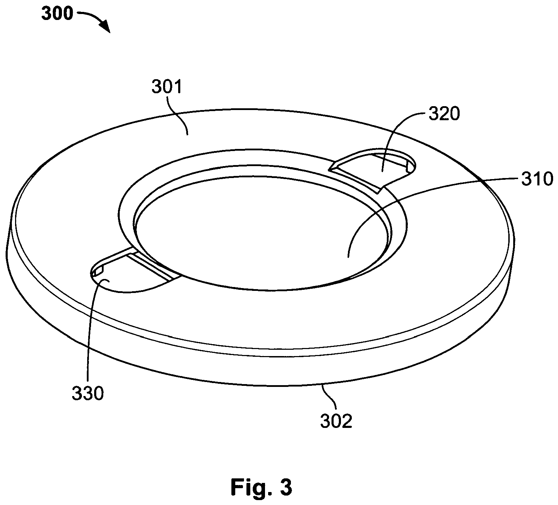

Fig. 3 shows a schematic perspective view of a cover 300. The cover 300 is designed for being arranged on the frame 200 shown in Fig. 2. The cover 300 preferably comprises an electrically insulating material, for example a plastic material. The cover 300 can for example be produced by molding.

The cover 300 comprises a generally flat shape with an upper side 301 and a lower side 302 that is opposed to the upper side 301. The cover 300 comprises a circular shape that matches the shape of the frame 200. On the lower side 302 of the cover 300, the cover 300 comprises a plurality of tongues which are not visible in Fig. 3. The cover 300 can be connected to the frame 200 by sliding the tongues of the cover 300 into the grooves 240 of the frame 200.

The cover 300 comprises a central opening 310 which is arranged approximately in the center of the cover 300. The central opening 310 forms an opening between the upper side 301 and the lower side 302 of the cover 300. The diameter of the central opening 310 is preferably slightly larger than the diameter of the arrangement of sealing compound 140 on the upper side 111 of the circuit board 110 of the LED package 100.

The cover 300 further comprises a first opening 320 and a second opening 330. The first opening 320 and the second opening 330 form openings between the upper side 301 and the lower side 302 of the cover 300. The first opening 320 and the second opening 330 are arranged at opposed sides of the central opening 310. When the cover 300 is arranged on the frame 200, the first opening 320 of the cover 300 is arranged above the first side opening 220 of the frame 200 and the second opening 330 of the cover 300 is arranged above the second side opening 230 of the frame 200.

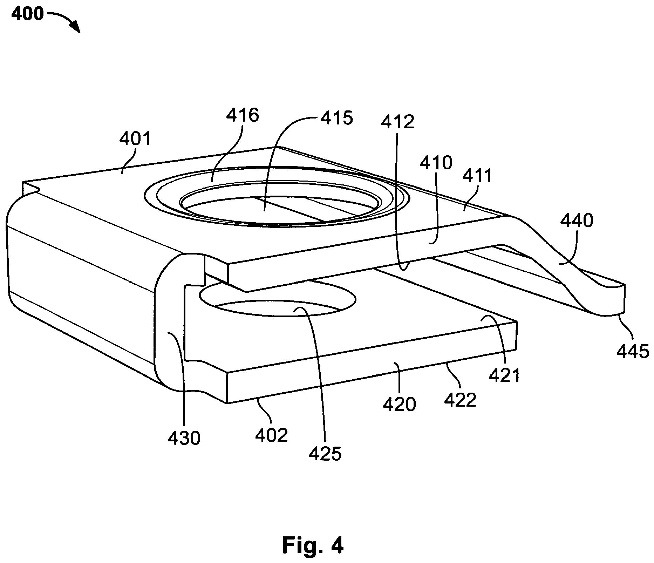

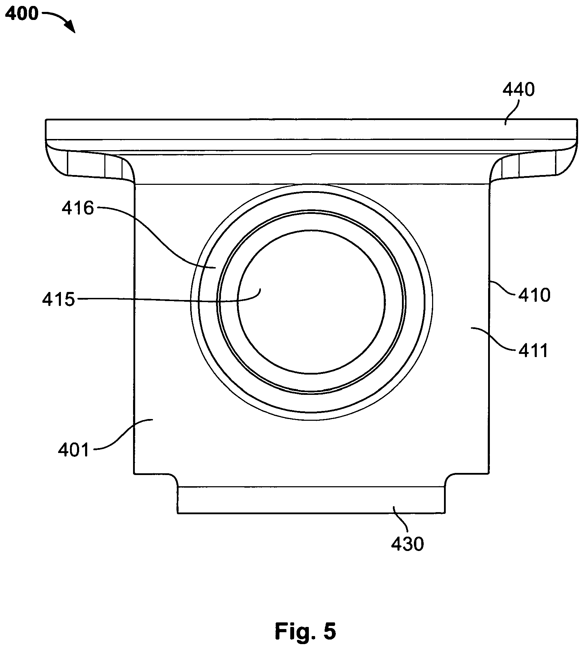

Fig. 4 shows a schematic perspective view of a first clamp 400. Fig. 5 shows a schematic top view of the first clamp 400. The first clamp 400 is elastically deformable. The first clamp 400 preferably comprises a metal. The first clamp 400 can for example be fabricated from a sheet metal plate by means of stamping and bending.

The first clamp 400 comprises an upper plate 410 and a lower plate 420. The upper plate 410 and the lower plate 420 each comprise a generally rectangular shape. The upper plate 410 and the lower plate 420 are arranged in parallel to each other and above each other. The upper plate 410 comprises an upper side 411 and a lower side 412 that is opposed to the upper side 411. The lower plate 420 comprises an upper side 421 and a lower side 422 that is opposed to the upper side 421. The lower side 412 of the upper plate 410 faces the upper side 421 of the lower plate 420. The upper side 411 of the upper plate 410 forms an upper side 401 of the first clamp 400. The lower side 422 of the lower plate 420 forms a lower side 402 of the first clamp 400.

The upper plate 410 and the lower plate 420 of the first clamp 400 are connected by a connecting section 430 of the first clamp 400. The connecting section 430 generally extends in a direction perpendicular to the upper plate 410 and the lower plate 420. The connecting section 430 is integrally connected to the upper plate 410 and the lower plate 420.

The first clamp 400 comprises a pressing section 440. The pressing section 440 is integrally connected to the upper plate 410 of the first clamp 400. The pressing section 440 is arranged at an end of the upper plate 410 that is opposed to the connecting section 430. The pressing section 440 is inclined with respect to the plane of the upper plate 410 and extends towards the lower plate 420 of the first clamp 400 and away from the connecting section 430.

At an end that is opposed to the upper plate 410, the pressing section 440 comprises a contact area 445. In a direction perpendicular to the upper plate 410 and the lower plate 420, the contact area 445 is arranged between the lower plate 420 and the upper plate 410. The contact area 445 is oriented in the same direction as the lower side 412 of the upper plate 410 and the lower side 422 of the lower plate 420.

The upper plate 410 of the first clamp 400 comprises an upper hole 415. The upper hole 415 forms an opening between the upper side 411 and the lower side 412 of the upper plate 410. The upper hole 415 is arranged approximately in the center of the upper plate 410 of the first clamp 400. The lower plate 420 comprises a lower hole 425. The lower hole 425 forms an opening between the upper side 421 and the lower side 422 of the lower plate 420. The lower hole 425 is arranged at approximately the center of the lower plate 420 and is arranged coaxially to the upper hole 415 of the upper plate 410. In the example depicted in Fig. 4, the lower hole 425 comprises a slightly smaller diameter than the upper hole 415. It is, however, possible to design the upper hole 415 and the lower hole 425 with the same diameters, or to design the lower hole 425 with a larger diameter than the upper hole 415.

The upper hole 415 comprises a chamfer 416 at the upper side 411 of the upper plate 410. The chamfer 416 can be omitted, however.

The first clamp 400 is elastically deformable such that the upper plate 410 can be pressed towards the lower plate 420 of the first clamp 400. When the upper plate 410 is pressed towards the lower plate 420, the connecting section 430 of the first clamp 400 is elastically deformed. When the upper plate 410 is pressed towards the lower plate 420, the upper plate 410 and the lower plate 420 are no longer arranged in parallel to each other, but are slightly inclined to each other. When the upper plate 410 is pressed towards the lower plate 420, the contact area 445 of the pressing section 440 of the first clamp 400 moves downwards in the direction in which the lower side 422 of the lower plate 420 points.

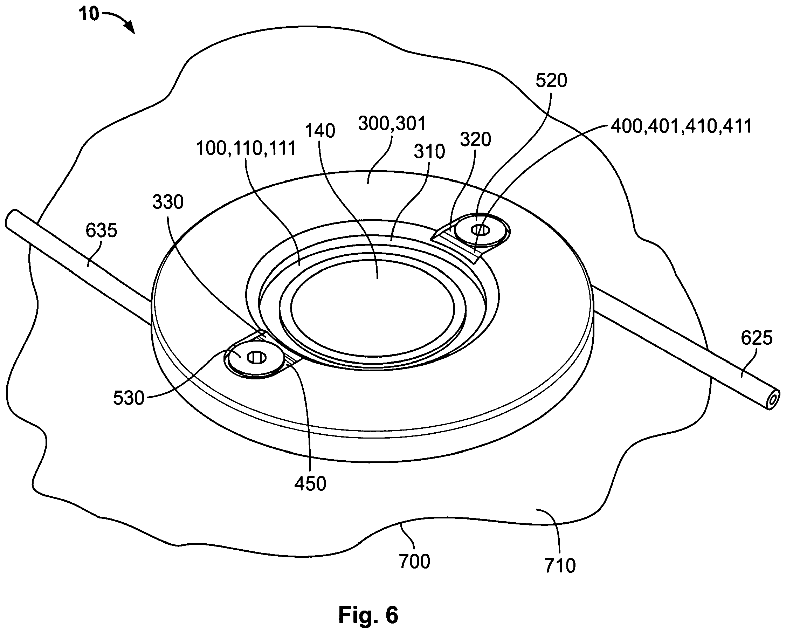

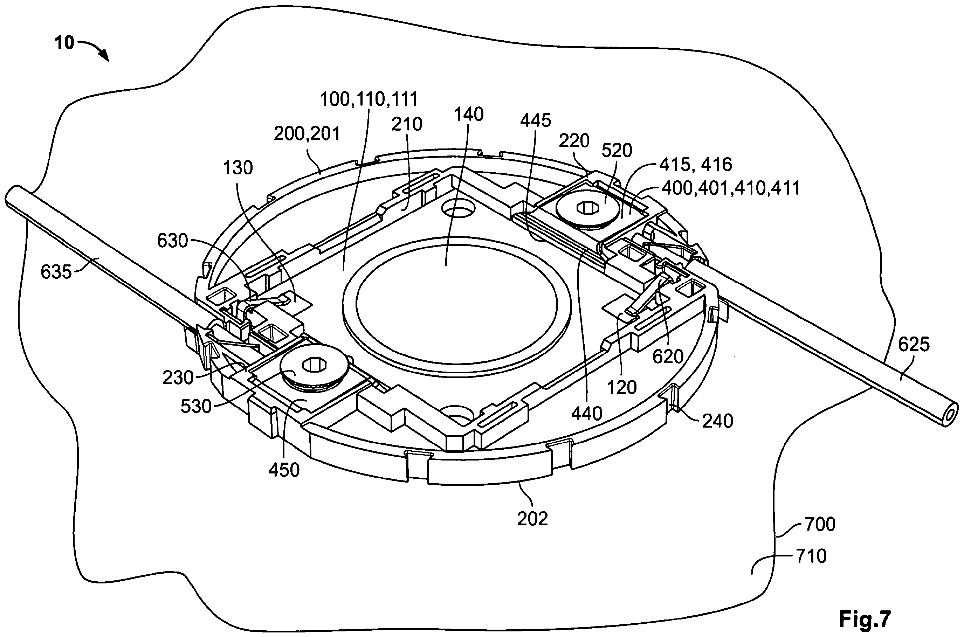

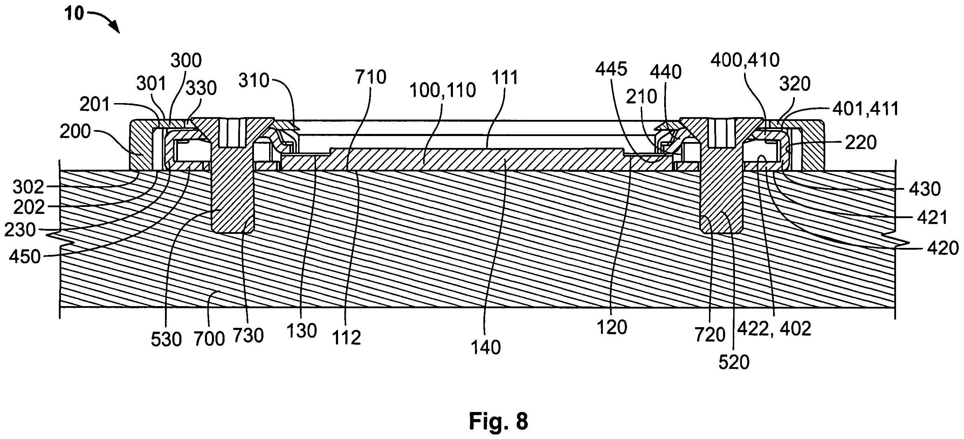

Fig. 6 shows a schematic perspective view of a socket assembly 10. The socket assembly 10 comprises the frame 200 of Fig. 2 and the cover 300 of Fig. 3. Fig. 7 shows a schematic perspective view of the socket assembly 10 with the cover 300 removed for clarity. Fig. 8 shows a schematic sliced side view of the socket assembly 10.

The socket assembly 10 serves for holding and mounting the LED package 100 shown in Fig. 1. The socket assembly 10 further provides electric connections to the LED package 100. The socket assembly 10 is arranged on a surface 710 of a carrier 700. The carrier 700 may for example be a heat sink. The socket assembly 10 serves to ensure a good thermal contact between the LED package 100 and the carrier 700 in order to remove heat generated in the LED package 100 from the LED package 100.

The frame 200 of the socket assembly 10 is arranged on the surface 710 of the carrier 700 such that the lower side 202 of the frame 200 faces the surface 710 of the carrier 700 and is in contact with the surface 710 of the carrier 700.

The LED package 100 is arranged in the central opening 210 of the frame 200 such that the lower side 112 of the circuit board 110 of the LED package 100 faces the surface 710 of the carrier 700 and is in contact with the surface 710 of the carrier 700.

The cover 300 is connected to the frame 200 of the socket assembly 10 and arranged above the LED package 100 such that light emitted by the LED chip on the upper side 111 of the circuit board 110 of the LED package 100 can be radiated through the central opening 310 of the cover 300.

The first clamp 400 is arranged in the first side opening 220 of the frame 200. The pressing section 440 of the first clamp 400 is oriented towards the central opening 210 of the frame 200. The contact area 445 of the pressing section 440 of the first clamp 400 is arranged above the upper side 111 of the circuit board 110 of the LED package 100 arranged in the central opening 210 of the frame 200. The first bar 226 and the second bar 227 of the first anchoring section 225 of the frame 200 are arranged between the upper plate 410 and the lower plate 420 of the first clamp 400.

A second clamp 450 is arranged in the second side opening 230 of the frame 200. The second clamp 450 is designed like the first clamp 400 and is arranged in the second side opening 230 of the frame 200 in a manner analogous to the arrangement of the first clamp 400.

The carrier 700 comprises a first threaded hole 720 and a second threaded hole 730. The first threaded hole 720 and the second threaded hole 730 extend from the surface 710 of the carrier 700 into the carrier 700. A first screw 520 extends through the upper hole 415 of the upper plate 410 of the first clamp 400 and the lower hole 425 of the lower plate 420 of the first clamp 400 into the first threaded hole 720 of the carrier 700. A second screw 530 extends in an analogous manner through the second clamp 450 into the second threaded hole 730 of the carrier 700. The first screw 520 and the second screw 530 fixate the socket assembly 10 on the surface 710 of the carrier 700.

The screw head of the first screw 520 comprises a diameter that is larger than the diameter of the upper hole 415 in the upper plate 410 of the first clamp 400. The screw head of the first screw 520 is partially sunk in the chamfer 416 of the upper hole 415 in the upper plate 410 of the first clamp 400.

Screwing the first screw 520 into the first threaded hole 720 presses the upper plate 410 of the first clamp 400 towards the surface 710 of the carrier 700 and thus towards the lower plate 420 of the first clamp 400. Pressing the upper plate 410 of the first clamp 400 towards the lower plate 420 of the first clamp 400 clamps the first bar 226 and the second bar 227 of the first anchoring section 225 of the frame 200 between the lower side 412 of the upper plate 410 and the upper side 421 of the lower plate 420 of the first clamp 400 and thus fixates the frame 200 of the socket assembly 10 with respect to the first clamp 400 and the carrier 700.

At the same time, pressing the upper plate 410 of the first clamp 400 towards the lower plate 420 of the first clamp 400 presses the contact area 445 of the pressing section 440 of the first clamp 400 against the upper side 111 of the circuit board 110 of the LED package 100 and thus presses the circuit board 110 of the LED package 100 against the surface 710 of the carrier 700.

Screwing the second screw 530 into the second threaded hole 730 of the carrier 700 analogously clamps the first bar 236 and the second bar 237 of the second anchoring section 235 of the frame 200 between the upper plate and the lower plate of the second clamp 450 and analogously presses the pressing section of the second clamp 450 against the upper side 111 of the circuit board 110 of the LED package 100 to press the circuit board 110 of the LED package 100 against the surface 710 of the carrier 700.

The pressure force exerted by the contact area 445 of the pressing section 440 of the first clamp 400 on the upper side 111 of the circuit board 110 of the LED package 100 can be adjusted by adjusting how deep the first screw 520 is screwed into the first threaded hole 720 of the carrier 700. There is a monotonic relation between the screw torque of the first screw 520 and the pressure force exerted on the circuit board 110 of the LED package 100 by the first clamp 400. This monotonic relation can be used to precisely adjust the desired pressure exerted on the circuit board 110 of the LED package 100. The same holds for the second screw 530.

A first contact spring 620 and a second contact spring 630 are arranged in the frame 200 of the socket assembly 10. The first contact spring 620 and the second contact spring 630 comprise an electrically conductive material, preferably a metal. The first contact spring 620 is in electric contact with the first contact pad 120 arranged on the upper side 111 of the circuit board 110 of the LED package 100. The second contact spring 630 is in electric contact with the second contact pad 130 arranged on the upper side 111 of the circuit board 110 of the LED package 100. The electric contacts between the contact springs 620, 630 and the contact pads 120, 130 are provided by elastic spring elements of the contact springs 620, 630.

A first wire 625 is connected to the frame 200 of the socket assembly 10 such that the first wire 625 is electrically connected to the first contact spring 620 and thus also to the first contact pad 120 of the LED package 100. A second wire 635 is connected to the frame of the socket assembly 10 such that the second wire 635 is electrically connected to the second contact spring 630 and thus also to the second contact pad 130 of the LED package 100.

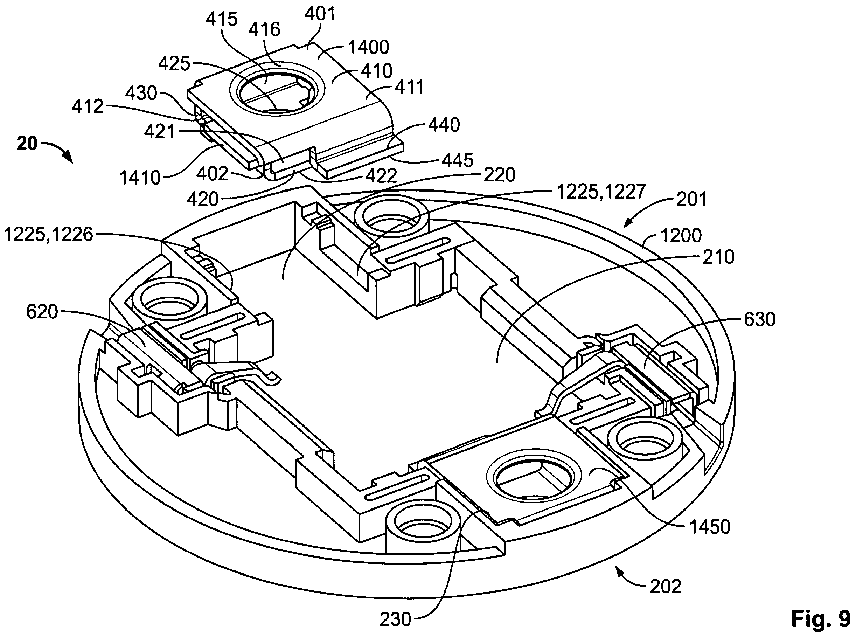

Fig. 9 shows a schematic perspective view of parts of a socket assembly 20. The socket assembly 20 is largely similar to the socket assembly 10 which was described above with reference to Figs. 1 to 8. Like components of the socket assembly 10 and the socket assembly 20 are denoted with the same numerals in Fig. 9 as in Figs. 1 to 8 and will not be explained in detail again. The following description will focus on the differences between the socket assembly 10 and the socket assembly 20. The description of the socket assembly 10 applies accordingly to the socket assembly 20, unless stated otherwise.

The socket assembly 20 comprises a frame 1200 that replaces the frame 200 of the socket assembly 10. The frame 1200 comprises a central opening 210, a first side opening 220 and a second side opening 230, just like the frame 200.

In the first side opening 220, the frame 1200 comprises a first anchoring section 1225. The first anchoring section 1225 comprises a first bar 1226 and a second bar 1227. The first bar 1226 and the second bar 1227 are arranged parallel to each other on two opposing sides of the first side opening 220. The lower sides of the first bar 1226 and the second bar 1227 are flush with the lower side 202 of the frame 1200. In the area of the second side opening 230, the frame 1200 comprises a second anchoring section which is designed like the first anchoring section 1225.

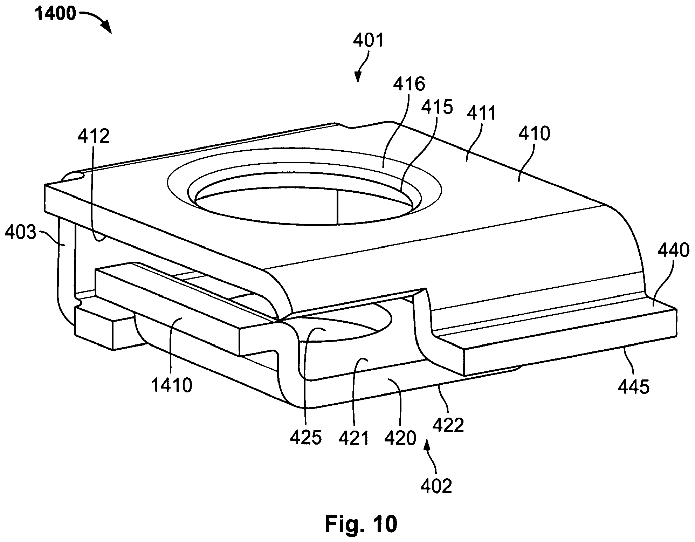

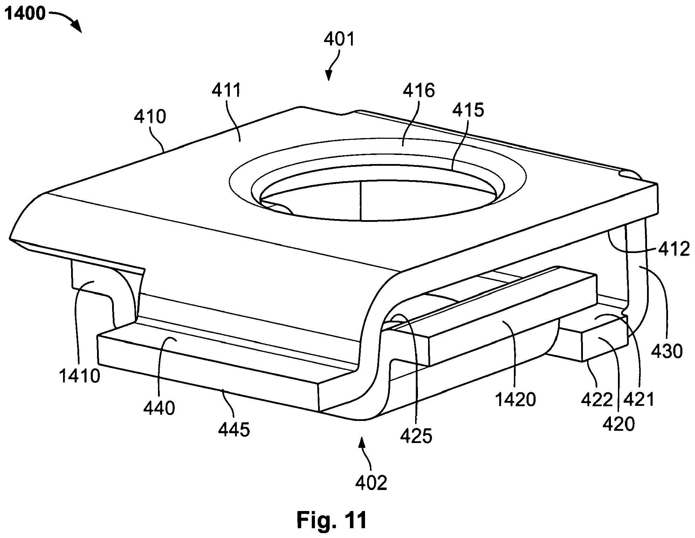

The socket assembly 20 comprises a first clamp 1400 and a second clamp 1450 that replace the first clamp 400 and the second clamp 450 of the socket assembly 10. Fig. 10 shows a first schematic perspective view of the first clamp 1400. Fig. 11 shows a second perspective view of the first clamp 1400. The first clamp 1400 is largely similar to the first clamp 400 of the socket assembly 10. The second clamp 1450 is designed like the first clamp 1400.

In contrast to the first clamp 400, the lower plate 420 of the first clamp 1400 comprises a first wing section 1410 and a second wing section 1420 that is opposed to the first wing section 1410. The first wing section 1410 and the second wing section 1420 extend in parallel to each other in a direction from the connecting section 430 of the first clamp 1400 towards the pressing section 440 of the first clamp 1400. The first wing section 1410 and the second wing section 1420 each extend from the lower side 402 of the first clamp 1400 partially towards the upper plate 410 and the upper side 401 of the first clamp 1400.

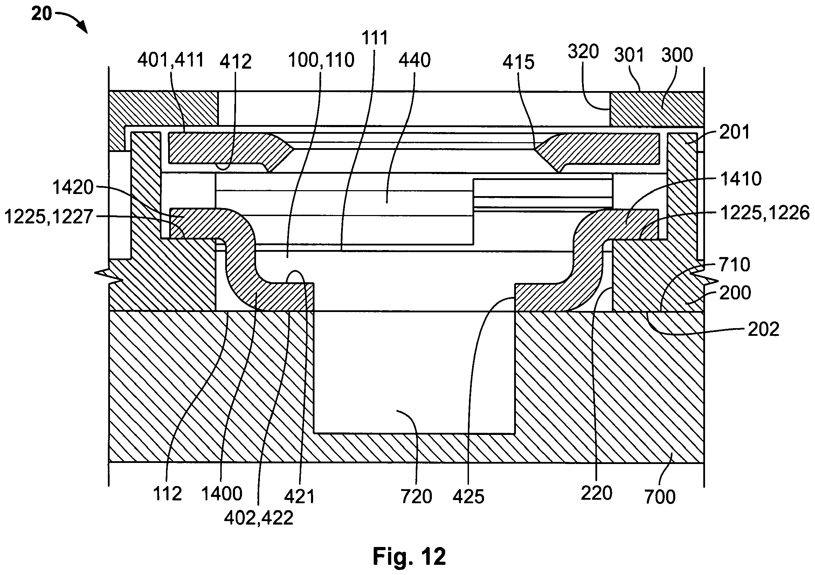

The first clamp 1400 of the socket assembly 20 can be arranged in the first side opening 220 of the frame 1200 of the socket assembly 20. The second clamp 1450 of the socket assembly 20 can be arranged in the second side opening 230 of the frame 1200 of the socket assembly 20. Fig. 12 shows a schematic cross section of a part of the socket assembly 20. The socket assembly 20 is sliced on a plane that extends through the first side opening 220 of the frame 1200 and through the first clamp 1400 arranged in the first side opening 220 of the frame 1200.

The first bar 1226 of the first anchoring section 1225 of the first side opening 220 of the frame 1200 is arranged below the first wing section 1410 of the first clamp 1400 of the socket assembly 20 such that the lower side 422 of the first wing section 1410 faces the first bar 1226. The second bar 1227 of the first anchoring section 1225 of the first side opening 220 of the frame 1200 of the second assembly 20 is accordingly arranged below the second wing section 1420 of the first clamp 1400 such that the lower side 422 of the second wing section 1420 is oriented towards the second bar 1227 of the first anchoring section 1225. The first wing section 1410 and the second wing section 1420 of the first clamp 1400 press the lower side 202 of the frame 1200 of the socket assembly 20 against the surface 710 of the carrier 700.

### Reference symbols

- 10: socket assembly
- 20: socket assembly

- 100: LED package
- 110: circuit board
- 111: upper side
- 112: lower side
- 120: first contact pad
- 130: second contact pad
- 140: sealing compound

- 200: frame
- 201: upper side
- 202: lower side
- 210: central opening
- 220: first side opening
- 225: first anchoring section
- 226: first bar
- 227: second bar
- 230: second side opening
- 235: second anchoring section
- 236: first bar
- 237: second bar
- 240: groove

- 300: cover
- 301: upper side
- 302: lower side
- 310: central opening
- 320: first opening
- 330: second opening

- 400: first clamp
- 401: upper side
- 402: lower side
- 410: upper plate
- 411: upper side
- 412: lower side
- 415: upper hole
- 416: chamfer
- 420: lower plate
- 421: upper side
- 422: lower side
- 425: lower hole
- 430: connecting section
- 440: pressing section
- 445: contact area

- 450: second clamp

- 520: first screw
- 530: second screw

- 620: first contact spring
- 625: first wire
- 630: second contact spring
- 635: second wire

- 700: carrier
- 710: surface
- 720: first threaded hole
- 730: second threaded hole

- 1200: frame
- 1225: first anchoring section
- 1226: first bar
- 1227: second bar

- 1400: first clamp
- 1410: first wing section
- 1420: second wing section
- 1450: second clamp

## Claims

1. A socket assembly (10, 20),
comprising a frame (200, 1200) and a first clamp (400, 1400),
wherein the first clamp (400, 1400) comprises an upper plate (410) and a lower plate (420) that are arranged in parallel to each other,
wherein the frame (200, 1200) comprises a central opening (210) for receiving a circuit board (110), wherein the upper plate (410) is connected to a pressing section (440) of the first clamp (400, 1400) that is provided for being pressed on a circuit board (110) arranged in the central opening (210), **characterized in that**
the frame (200, 1200) can be arranged on a carrier (700) such that the lower plate (420) of the first clamp (400, 1400) is in contact with the carrier (700),
wherein the upper plate (410) and the lower plate (420) of the first clamp (400, 1400) can be pressed together such that a circuit board (110) arranged in the central opening (210) is pressed against the carrier (700) by the pressing section (440) of the first clamp (400, 1400).

2. The socket assembly (20) according to claim 1, wherein the lower plate (420) comprises a wing section (1410) that extends from the lower plate (420) at least partially towards the upper plate (410), wherein an anchoring section (1225) of the frame (1200) is arranged below the wing section (1410).

3. The socket assembly (10) according to claim 1, wherein an anchoring section (225) of the frame (200) is arranged between the upper plate (410) and the lower plate (420),
wherein the upper plate (410) and the lower plate (420) can be pressed together such that the anchoring section (225) of the frame (200) is clamped between the upper plate (410) and the lower plate (420).

4. The socket assembly (10, 20) according to one of claims 1 to 3,
wherein the upper plate (410) comprises an upper hole (415),
wherein the lower plate (420) comprises a lower hole (425) that is arranged coaxially to the upper hole (415) .

5. The socket assembly (10, 20) according to claim 4, wherein the upper hole (415) comprises a chamfer (416) on the side (411) of the upper plate (410) that faces away from the lower plate (420).

6. The socket assembly (10, 20) according to one of claims 1 to 5,
wherein the upper plate (410) and the lower plate (420) of the clamp (400) are connected by a connecting section (430).

7. The socket assembly (10, 20) according to claim 6, wherein the connecting section (430) is opposed to the pressing section (440).

8. The socket assembly (10, 20) according to one of claims 1 to 7,
wherein the pressing section (440) extends from the upper plate (410) at least partially towards the lower plate (420).

9. The socket assembly (10, 20) according to one of claims 1 to 8,
wherein the clamp (400, 1400) comprises a metal.

10. The socket assembly (10, 20) according to one of claims 1 to 9,
wherein the clamp (400, 1400) is elastically deformable.

11. The socket assembly (10, 20) according to one of claims 1 to 10,
wherein the socket assembly (10) comprises a second clamp (450, 1450) that is designed like the first clamp (400, 1400).

12. The socket assembly (10, 20) according to one of claims 1 to 11,
wherein the socket assembly (10) is designed for receiving a printed circuit board (110) of an LED package (100) in the central opening (210) of the frame (200, 1200).

13. The socket assembly (10, 20) according to one of claims 1 to 12,
wherein the socket assembly (10) comprises a cover (300),
wherein the cover (300) can be arranged on the frame (200, 1200).

14. The socket assembly (10, 20) according to one of claims 1 to 13,
wherein a metallic contact spring (620) is arranged on the frame (200, 1200),
wherein the contact spring (620) is designed for being connected to a wire (625) and for being connected to a contact pad (120) of a circuit board (110) received in the central opening (210) of the frame (200, 1200).

## Patentansprüche

1. Buchsenanordnung (10, 20),
umfassend einen Rahmen (200, 1200) und eine erste Klemme (400, 1400),
wobei die erste Klemme (400, 1400) eine obere Platte (410) und eine untere Platte (420) umfasst, die parallel zueinander angeordnet sind,
wobei der Rahmen (200, 1200) eine mittlere Öffnung (210) zum Aufnehmen einer Leiterplatte (110) umfasst,
wobei die obere Platte (410) mit einem Pressabschnitt (440) der ersten Klemme (400, 1400) verbunden ist, der dazu bereitgestellt ist, auf eine in der mittleren Öffnung (210) angeordnete Leiterplatte (110) gepresst zu werden,
**dadurch gekennzeichnet, dass**
der Rahmen (200, 1200) an einem Träger (700) angeordnet werden kann, sodass die untere Platte (420) der ersten Klemme (400, 1400) mit dem Träger (700) in Kontakt steht, wobei die obere Platte (410) und die untere Platte (420) der ersten Klemme (400, 1400) zusammengepresst werden können, sodass eine in der mittleren Öffnung (210) angeordnete Leiterplatte (110) durch den Pressabschnitt (440) der ersten Klemme (400, 1400) gegen den Träger (700) gepresst wird.

2. Buchsenanordnung (20) nach Anspruch 1, wobei die untere Platte (420) einen Flügelabschnitt (1410) umfasst, der sich von der unteren Platte (420) zumindest teilweise zur oberen Platte (410) erstreckt,
wobei unter dem Flügelabschnitt (1410) ein Verankerungsabschnitt (1225) des Rahmens (1200) angeordnet ist.

3. Buchsenanordnung (10) nach Anspruch 1,
wobei zwischen der oberen Platte (410) und der unteren Platte (420) ein Verankerungsabschnitt (225) des Rahmens (200) angeordnet ist,
wobei die obere Platte (410) und die untere Platte (420) zusammen gepresst werden können, sodass der Verankerungsabschnitt (225) des Rahmens (200) zwischen der oberen Platte (410) und der unteren Platte (420) eingeklemmt wird.

4. Buchsenanordnung (10, 20) nach einem der Ansprüche 1 bis 3,
wobei die obere Platte (410) ein oberes Loch (415) umfasst,
wobei die untere Platte (420) ein unteres Loch (425) umfasst, das koaxial zum oberen Loch (415) angeordnet ist.

5. Buchsenanordnung (10, 20) nach Anspruch 4, wobei das obere Loch (415) auf der von der unteren Platte (420) abgewandten Seite (411) der oberen Platte (410) eine Abschrägung (416) umfasst.

6. Buchsenanordnung (10, 20) nach einem der Ansprüche 1 bis 5,
wobei die obere Platte (410) und die untere Platte (420) der Klemme (400) durch einen Verbindungsabschnitt (430) verbunden sind.

7. Buchsenanordnung (10, 20) nach Anspruch 6, wobei der Verbindungsabschnitt (430) dem Pressabschnitt (440) gegenüberliegt.

8. Buchsenanordnung (10, 20) nach einem der Ansprüche 1 bis 7,
wobei sich der Pressabschnitt (440) von der oberen Platte (410) zumindest teilweise zur unteren Platte (420) erstreckt.

9. Buchsenanordnung (10, 20) nach einem der Ansprüche 1 bis 8,
wobei die Klemme (400, 1400) ein Metall umfasst.

10. Buchsenanordnung (10, 20) nach einem der Ansprüche 1 bis 9,
wobei die Klemme (400, 1400) elastisch verformbar ist.

11. Buchsenanordnung (10, 20) nach einem der Ansprüche 1 bis 10,
wobei die Buchsenanordnung (10) eine zweite Klemme (450, 1450) umfasst, die wie die erste Klemme (400, 1400) gestaltet ist.

12. Buchsenanordnung (10, 20) nach einem der Ansprüche 1 bis 11,
wobei die Buchsenanordnung (10) zum Aufnehmen einer gedruckten Leiterplatte (110) eines LED-Gehäuses (100) in der mittleren Öffnung (210) des Rahmens (200, 1200) gestaltet ist.

13. Buchsenanordnung (10, 20) nach einem der Ansprüche 1 bis 12,
wobei die Buchsenanordnung (10) eine Abdeckung (300) umfasst,
wobei die Abdeckung (300) am Rahmen (200, 1200) angeordnet sein kann.

14. Buchsenanordnung (10, 20) nach einem der Ansprüche 1 bis 13,
wobei am Rahmen (200, 1200) eine metallische Kontaktfeder (620) angeordnet ist,
wobei die Kontaktfeder (620) dazu gestaltet ist, mit einem Draht (625) verbunden zu sein und mit einem Kontaktfeld (120) einer in der mittleren Öffnung (210) des Rahmens (200, 1200) aufgenommenen Leiterplatte (110) verbunden zu sein.

## Revendications

1. Ensemble douille (10, 20) comprenant un cadre (200, 1200) et une première pince (400, 1400), dans lequel la première pince (400, 1400) comprend une plaque supérieure (410) et une plaque inférieure (420) qui sont disposées parallèlement l'une à l'autre ;
dans lequel le cadre (200, 1200) comprend une ouverture centrale (210) pour recevoir une carte de circuit imprimé (110) ;
dans lequel la plaque supérieure (410) est raccordée à une section de pression (440) de la première pince (400, 1400) qui est disposée pour être serrée sur une carte de circuit imprimé (110) disposée dans l'ouverture centrale (210),
**caractérisé en ce que** le cadre (200, 1200) peut être disposé sur un support (700) de telle sorte que la plaque inférieure (420) de la première pince (400, 1400) est en contact avec le support (700),
dans lequel la plaque supérieure (410) et la plaque inférieure (420) de la première pince (400, 1400) peuvent être serrées l'une vers l'autre de telle sorte qu'une carte de circuit imprimé (110) disposée dans l'ouverture centrale (210) est pressée contre le support (700) par la section de pression (440) de la première pince (400, 1400).

2. Ensemble douille (20) selon la revendication 1, dans lequel la plaque inférieure (420) comprend une section d'aile (1410) qui s'étend depuis la plaque inférieure (420) au moins partiellement vers la plaque supérieure (410),
dans lequel une section d'ancrage (1225) du cadre (1200) est disposée au-dessous de la section d'aile (1410).

3. Ensemble douille (10) selon la revendication 1, dans lequel une section d'ancrage (225) du cadre (200) est disposée entre la plaque supérieure (410) et la plaque inférieure (420),
dans lequel la plaque supérieure (410) et la plaque inférieure (420) peuvent être serrées l'une vers l'autre de telle sorte que la section d'ancrage (225) du cadre (200) est serrée entre la plaque supérieure (410) et la plaque inférieure (420).

4. Ensemble douille (10, 20) selon l'une quelconque des revendications 1 à 3, dans lequel la plaque supérieure (410) comprend un trou supérieur (415),
dans lequel la plaque inférieure (420) comprend un trou inférieur (425) qui est disposé coaxialement au trou supérieur (415).

5. Ensemble douille (10, 20) selon la revendication 4, dans lequel le trou supérieur (415) comprend un chanfrein (416) sur le côté (411) de la plaque supérieure (410) qui n'est pas tourné vers la plaque inférieure (420).

6. Ensemble douille (10, 20) selon l'une quelconque des revendications 1 à 5, dans lequel la plaque supérieure (410) et la plaque inférieure (420) de la pince (400) sont raccordées par une section de raccord (430).

7. Ensemble douille (10, 20) selon la revendication 6, dans lequel la section de raccord (430) est du côté opposé à la section de pression (440).

8. Ensemble douille (10, 20) selon l'une quelconque des revendications 1 à 7, dans lequel la section de pression (440) s'étend depuis la plaque supérieure (410) au moins partiellement vers la plaque inférieure (420).

9. Ensemble douille (10, 20) selon l'une quelconque des revendications 1 à 8, dans lequel la pince (400, 1400) comprend un métal.

10. Ensemble douille (10, 20) selon l'une quelconque des revendications 1 à 9, dans lequel la pince (400, 1400) peut se déformer élastiquement.

11. Ensemble douille (10, 20) selon l'une quelconque des revendications 1 à 10, dans lequel l'ensemble douille (10) comprend une seconde pince (450, 1450) qui est conçue comme la première pince (400, 1400).

12. Ensemble douille (10, 20) selon l'une quelconque des revendications 1 à 11, dans lequel l'ensemble douille (10) est conçu pour recevoir la carte de circuit imprimé (110) d'un boîtier (100) de DEL dans l'ouverture centrale (210) du cadre (200, 1200).

13. Ensemble douille (10, 20) selon l'une quelconque des revendications 1 à 12, dans lequel l'ensemble douille (10) comprend un couvercle (300),
dans lequel le couvercle (300) peut être agencé sur le cadre (200, 1200) .

14. Ensemble douille (10, 20) selon l'une quelconque des revendications 1 à 13, dans lequel une lame porte-contact (620) métallique est disposée sur le cadre (200, 1200),
dans lequel la lame porte-contact (620) est conçue pour être raccordée à un fil (625) et pour être raccordée au plot de connexion (120) d'une carte de circuit imprimé (110) reçue dans l'ouverture centrale (210) du cadre (200, 1200) .
